# EUROPÄISCHE PATENTANMELDUNG

(11) **EP 2 249 147 A2**
(43) Veröffentlichungstag der Anmeldung: **10.11.2010**
(21) Anmeldenummer: 10003957.7
(22) Anmeldetag: 15.04.2010
(51) Int. Cl.: G01N 21/954, G02B 23/24

(54) **Vorrichtung zur Abbildung der Innenfläche eines Hohlraumes in einem Werkstück**

(30) Priorität: 04.05.2009 DE 102009019459
(71) Anmelder: Hommel-Etamic GMBH, Alte Tuttlinger Strasse 20 78056 Villingen-Schwenningen (DE)
(72) Erfinder: Keller, Hubert, 78464 Konstanz (DE); Rudolf, Michael, 78467 Konstanz (DE)
(74) Vertreter: Wagner, Carsten

(57) **Zusammenfassung**

Eine Vorrichtung 2 zur Abbildung der Innenfläche 4 eines Hohlraumes in einem Werkstück 6 weist eine Optik 8 mit Rundumblick auf, die mit einem Bildaufnehmer 10 und einer nachgeordneten Auswertungseinrichtung in Bildübertragungsverbindung steht. Die Vorrichtung 2 weist ferner eine Beleuchtungsanordnung 16 mit einer Lichtquelle 18 zum Beleuchten eines von der Optik 8 erfaßten Abbildungsbereichs der Innenfläche 4 auf. Erfindungsgemäß ist die Beleuchtungsanordnung 16 relativ zu der Optik 8 derart angeordnet und ihr Strahlengang derart gewählt, daß ein erster axialer Abschnitt des Abbildungsbereiches in Hellfeldbeleuchtung und gleichzeitig ein zu dem ersten axialen Abschnitt beabstandeter weiterer axialer Abschnitt des Abbildungsbereiches in Dunkelfeldbeleuchtung beleuchtbar ist.

## Beschreibung

Die Erfindung betrifft eine Vorrichtung der im Oberbegriff des Anspruchs 1 genannten Art zur Abbildung der Innenfläche eines Hohlraumes in einem Werkstück.

Durch WO 2009/003692 ist eine Vorrichtung der betreffenden Art zur Abbildung der Innenfläche eines Hohlraumes in einem Werkstück bekannt, die eine Optik mit Rundumblick aufweist, die mit einem Bildaufnehmer und einer nachgeordneten Auswertungseinrichtung in Bildübertragungsverbindung steht. Die bekannte Vorrichtung weist ferner eine Beleuchtungsanordnung zum Beleuchten eines von der Optik erfaßten Abbildungsbereiches der Innenfläche auf.

Derartige Vorrichtungen werden beispielsweise bei der Zylinderbohrungsinspektion in Kurbelgehäusen verwendet und dienen dazu, die radiale Innenfläche der Zylinderbohrung abzubilden und daraufhin zu untersuchen, ob sie vorbestimmten Anforderungen hinsichtlich der Oberflächenbeschaffenheit genügt.

Der Erfindung liegt die Aufgabe zugrunde, eine Vorrichtung der im Oberbegriff des Anspruchs 1 genannten Art zur Abbildung der Innenfläche eines Hohlraumes in einem Werkstück anzugeben, deren Möglichkeiten hinsichtlich der Abbildung der Innenfläche erweitert sind.

Diese Aufgabe wird durch die im Anspruch 1 angegebene Erfindung gelöst.

Der Grundgedanke der Erfindung besteht darin, die Beleuchtungsanordnung so auszugestalten, daß ein von der Optik erfaßter Abbildungsbereich der Innenfläche teilweise in Hellfeldbeleuchtung und teilweise in Dunkelfeldbeleuchtung beleuchtet wird. In Hellfeldbeleuchtung, bei der das von der abzubildenden Innenfläche reflektierte Licht zur Abbildung genutzt wird, ergibt sich eine besonders kontrastreiche Abbildung, mit der beispielsweise und insbesondere Kratzer und Porositäten in der abzubildenden Innenfläche festgestellt werden können. Demgegenüber lassen sich bei einer Dunkelfeldbeleuchtung, bei der der Strahlengang des Lichtes so geführt ist, daß zur Abbildung vor allem an der abzubildenden Innenfläche gestreute Strahlen herangezogen werden, andere Strukturdefekte, beispielsweise bei Gußteilen Gießfehler, feststellen.

Die erfindungsgemäße Vorrichtung ermöglicht es somit, die abzubildende Innenfläche sowohl in Hellfeldbeleuchtung als auch in Dunkelfeldbeleuchtung abzubilden. Die erfindungsgemäße Vorrichtung kombiniert somit die hinsichtlich der Erfassung von Defekten bestehenden Vorteile beider Beleuchtungsverfahren. Erfindungsgemäß ist es hierbei möglich, einen ersten axialen Abschnitt des Abbildungsbereiches in Hellfeldbeleuchtung abzubilden und gleichzeitig einen zu dem ersten axialen Abschnitt beabstandeten zweiten axialen Abschnitt des Abbildungsbereiches in Dunkelfeldbeleuchtung abzubilden, so daß gleichzeitig eine Hell- und Dunkelfeldmessung ausgeführt werden. Es ist erfindungsgemäß jedoch auch möglich, ein und denselben axialen Abschnitt der abzubildenden Innenfläche zeitlich aufeinanderfolgend sowohl in Dunkelfeldbeleuchtung als auch in Hellfeldbeleuchtung abzubilden. Beispielsweise kann der Vorrichtung hierzu eine Vorschubeinrichtung zugeordnet sein, mittels derer die Vorrichtung relativ zu der abzubildenden Innenfläche axial bewegbar ist. Befindet sich beispielsweise ein in Dunkelfeldbeleuchtung untersuchter Abschnitt der Innenfläche in Vorschubrichtung schräg vor der Optik, während sich ein in Hellfeldbeleuchtung untersuchter Abschnitt in Axialrichtung des Hohlraumes etwa auf Höhe der Optik oder etwas hinter dieser befindet, so kann ein vorbestimmter axialer Bereich der Innenfläche während des Vorschubes zunächst in Dunkelfeldbeleuchtung und bei einem weiteren Vorschub der Vorrichtung daran anschließend in Hellfeldbeleuchtung abgebildet werden.

Auf diese Weise sind die Möglichkeiten der erfindungsgemäßen Vorrichtung hinsichtlich der Abbildung der Innenfläche des Hohlraumes erweitert.

Dadurch, daß erfindungsgemäß sowohl in Hellfeldals auch in Dunkelfeldbeleuchtung abgebildet werden kann, sind mittels der erfindungsgemäßen Vorrichtung besonders umfassende und hinsichtlich der Detektion von Oberflächendefekten aussagekräftige Prüfvorgänge ermöglicht.

Die erfindungsgemäße Vorrichtung ist relativ einfach im Aufbau und damit relativ kostengünstig herstellbar.

Erfindungsgemäß ist es grundsätzlich möglich, eine Beleuchtungsanordnung mit zwei oder mehreren Lichtquellen vorzusehen, von denen eine Lichtquelle zur Realisierung der Hellfeldbeleuchtung in dem ersten axialen Abschnitt des Abbildungsbereiches und eine andere Lichtquelle zur Realisierung der Dunkelfeldbeleuchtung in dem zweiten axialen Abschnitt vorgesehen ist. Um die erfindungsgemäße Vorrichtung besonders einfach im Aufbau zu gestalten, sieht eine vorteilhafte Weiterbildung der Erfindung eine Spiegelanordnung vor, deren Reflexionsfläche teilweise im Strahlengang der Lichtquelle angeordnet ist, derart, daß in Abbildungsposition der Vorrichtung Teilstrahlen des von der Lichtquelle emittierten Lichtes auf den zweiten axialen Abschnitt des Abbildungsbereiches auftreffen und die Reflexionsfläche andere Teilstrahlen auf den ersten axialen Abschnitt reflektiert. Bei dieser Ausführungsform ist die erfindungsgemäß vorgesehene gleichzeitige Hellfeldbeleuchtung und Dunkelfeldbeleuchtung unterschiedlicher axialer Abschnitte an der Innenfläche des Hohlraumes somit mittels einer einzigen Lichtquelle realisierbar. Teilstrahlen des emittierten Lichtes, die von der Reflexionsfläche auf den ersten axialen Abschnitt reflektiert werden, können beispielsweise zur Realisierung der Hellfeldbeleuchtung dienen, während Teilstrahlen, die an der Reflexionsfläche der Spiegelanordnung vorbei auf den zweiten axialen Abschnitt auftreffen, zur Realisierung der Dunkelfeldbeleuchtung dienen können.

Eine vorteilhafte Weiterbildung der vorgenannten Ausführungsform sieht vor, daß die Spiegelanordnung eine ringförmige Reflexionsfläche aufweist. Auf diese Weise ist eine ringförmige Beleuchtung der Innenfläche des Werkstücks erzielt. Entsprechend den jeweiligen Anforderungen kann die Reflexionsfläche der Spiegelanordnung im Schnitt gerade ausgebildet sein, so daß der Spiegel kegelstumpfförmig ausgebildet ist. Die Reflexionsfläche kann im Schnitt jedoch auch kreisförmig, asphärisch, parabelförmig oder in sonstiger Weise ausgebildet sein.

Eine andere Weiterbildung der Erfindung sieht vor, daß die Reflexionsfläche zur optischen Achse der Optik koaxial ist. Auf diese Weise ergibt sich eine in Umfangsrichtung der Innenfläche gleichmäßige Beleuchtung.

Insbesondere dann, wenn die Beleuchtungsanordnung in Richtung der optischen Achse der Optik abstrahlt, ist es zweckmäßig, daß die Reflexionsfläche zur optischen Achse wenigstens abschnittsweise winkelig angeordnet ist, wie dies eine andere vorteilhafte Weiterbildung der Ausführungsform mit der Spiegelanordnung vorsieht.

Eine außerordentlich vorteilhafte Weiterbildung der Erfindung sieht vor, daß die Optik einen Bildkwinkel von > 180°, vorzugsweise von etwa 185°, aufweist. Bei dieser Ausführungsform kann beispielsweise und insbesondere gleichzeitig ein in Richtung der optischen Achse schräg vor der Optik angeordneter, in Dunkelfeldbeleuchtung beleuchteter Abschnitt und ein in Richtung der optischen Achse etwa auf Höhe der Optik oder kurz hinter der Optik angeordneter, in Hellfeldbeleuchtung beleuchteter Abschnitt der Innenfläche abgebildet werden.

Um eine gleichmäßige Ausleuchtung des abzubildenden Abschnitts oder der abzubildenden Abschnitte der Innenfläche zu erzielen, sieht eine vorteilhafte Weiterbildung der Erfindung vor, daß die Beleuchtungsanordnung eine ringförmige Lichtquelle aufweist. Beispielsweise und insbesondere kann die ringförmige Lichtquelle durch eine Anordnung einer Mehrzahl von Leuchtdioden gebildet sein, die hinter einem Diffusor angeordnet sind.

Im Sinne eines besonders kompakten und raumsparenden Aufbaus der Vorrichtung ist es zweckmäßig, daß die Lichtquelle in Ausrichtung der optischen Achse in unmittelbarer Nähe zu der Optik angeordnet ist.

Gemäß einer anderen vorteilhaften Weiterbildung der Erfindung ist die Lichtquelle koaxial zur optischen Achse der Optik angeordnet.

Eine andere vorteilhafte Weiterbildung sieht vor, daß die Lichtquelle im wesentlichen koaxial zur optischen Achse der Optik abstrahlt.

Der Bildaufnehmer der erfindungsgemäßen Vorrichtung kann in beliebiger geeigneter Weise ausgebildet sein. Beispielsweise ist es möglich, als Bildaufnehmer einen Ringsensor zu verwenden, der einen ringförmigen Bereich aus dem Bildkreis der Optik erfaßt. Eine vorteilhafte Weiterbildung der Erfindung sieht jedoch insoweit vor, daß der Bildaufnehmer zur Erfassung des gesamten Bildkreises der Optik ausgebildet ist. Bei dieser Ausführungsform besteht aufgrund der Erfassung des gesamten Bildkreises der Optik insbesondere die Möglichkeit, gleichzeitig mehrere ringförmige Bereiche an der Innenfläche des Werkstücks abzubilden, von denen wenigstens einer in Hellfeldbeleuchtung und wenigstens ein anderer in Dunkelfeldbeleuchtung beleuchtet werden kann.

Um eine in Axialrichtung des Hohlraumes vollständige Abbildung der Innenfläche zu ermöglichen, ist es zweckmäßig, daß eine Vorschubeinrichtung für einen axialen Vorschub der Vorrichtung relativ zu dem Werkstück vorgesehen ist.

Die Abspeicherung von von dem Bildaufnehmer, der vorzugsweise einen digitalen Bildsensor aufweisen kann, aufgenommenen Bilddaten kann in beliebiger geeigneter Weise erfolgen. Insoweit sieht eine vorteilhafte Weiterbildung eine Speicherungseinrichtung zur Speicherung von Abbildungsdaten entsprechend der jeweiligen axialen Position der Vorrichtung relativ zu dem Werkstück vor. Bei dieser Ausführungsform werden während eines axialen Vorschubs der Vorrichtung zeitlich aufeinander folgend unterschiedliche ringförmige Bereiche an der Innenfläche des Hohlraumes abgebildet und die so gewonnenen Bilddaten abgespeichert, wobei eine Zuordnung zwischen der jeweiligen axialen Position der Vorrichtung und den jeweils gespeicherten Bilddaten gebildet ist.

Um eine in Umfangsrichtung der Innenfläche vollständige Abbildung zu ermöglichen, ist es zweckmäßig, daß die Optik einen Rundumblick von 360° aufweist. Entsprechende Optiken sind beispielsweise durch US 3 552 820, US 5 473 474, US 4 565 763 und EP 1 321 793 B1 bekannt.

Die erfindungsgemäße Vorrichtung ist zur Untersuchung beliebiger Innenflächen eines Hohlraumes, insbesondere rotationssymmetrischer, beispielsweise zylindrischer oder im wesentlichen zylindrischer Hohlräume geeignet. Eine vorteilhafte Weiterbildung der Erfindung sieht vor, daß die abzubildende Innenfläche im wesentlichen rotationssymmetrisch ausgebildet, insbesondere durch eine Zylinderbohrung eines Kurbelgehäuses gebildet ist.

Die Erfindung wird nachfolgend anhand der beigefügten Zeichnung näher erläutert, in der stark schematisiert Ausführungsbeispiele einer erfindungsgemäßen Vorrichtung dargestellt sind. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig.1: eine schematische Seitenansicht eines ersten Ausführungsbeispieles einer er- findungsgemäßen Vorrichtung in Abbil- dungsposition,
- Fig. 2: eine Abbildung auf einem Bildaufnehmer der Vorrichtung gemäß Fig. 1,
- Fig. 3: mittels der Vorrichtung gemäß Fig. 1 erzeugte digitale Abbilder von Abwick- lungen der abzubildenden Innenfläche im Hellfeld und im Dunkelfeld,
- Fig. 4: in gleicher Darstellung wie Fig. 1 ein zweites Ausführungsbeispiel einer erfin- dungsgemäßen Vorrichtung,
- Fig. 5: in gleicher Darstellung wie Fig. 1 ein drittes Ausführungsbeispiel einer erfin- dungsgemäßen Vorrichtung,
- Fig. 6: in gleicher Darstellung wie Fig. 1 ein viertes Ausführungsbeispiel einer erfin- dungsgemäßen Vorrichtung,
- Fig. 7: in gleicher Darstellung wie Fig. 1 ein fünftes Ausführungsbeispiel einer erfin- dungsgemäßen Vorrichtung,
- Fig. 8: in gleicher Darstellung wie Fig. 1 ein sechstes Ausführungsbeispiel einer er- findungsgemäßen Vorrichtung,
- Fig. 9: in gleicher Darstellung wie Fig. 1 ein siebtes Ausführungsbeispiel einer erfin- dungsgemäßen Vorrichtung,
- Fig. 10: in gleicher Darstellung wie Fig. 1 ein achtes Ausführungsbeispiel einer erfin- dungsgemäßen Vorrichtung und
- Fig. 11: in gleicher Darstellung wie Fig. 1 ein neuntes Ausführungsbeispiel einer erfin- dungsgemäßen Vorrichung.

In den Figuren der Zeichnung sind gleiche bzw. sich entsprechende Bauteile mit den gleichen Bezugszeichen versehen.

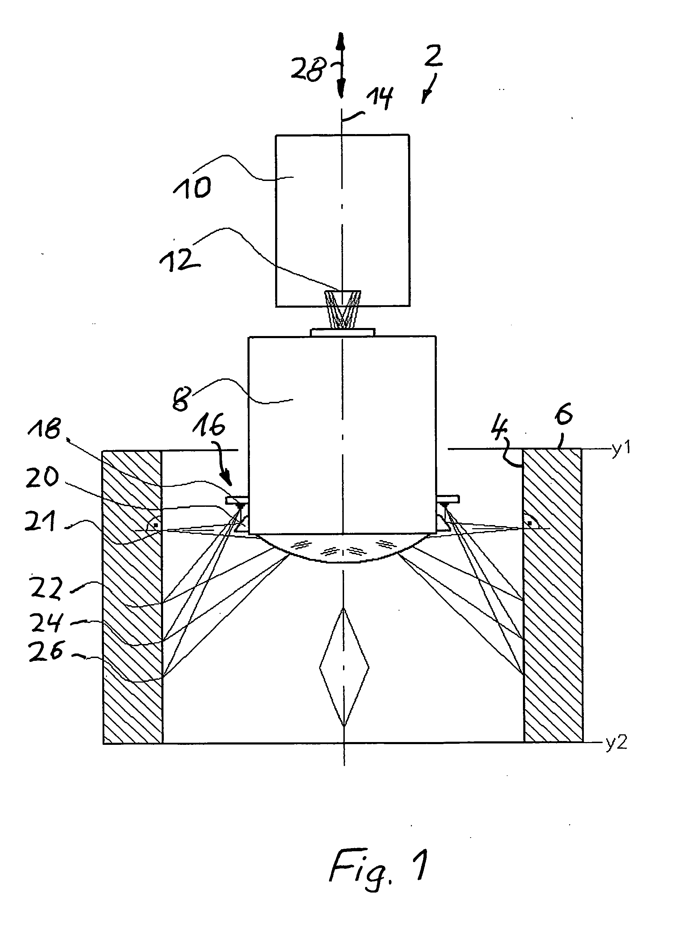

In Fig. 1 ist ein erstes Ausführungsbeispiel einer erfindungsgemäßen Vorrichtung 2 zur Abbildung einer Innenfläche 4 eines Hohlraumes eines Werkstücks 6 dargestellt. Bei dem dargestellten Ausführungsbeispiel handelt es sich bei der Innenfläche 4 um eine Innenfläche einer Zylinderbohrung eines Kurbelgehäuses. Die Vorrichtung 2 weist eine Optik 8 mit Rundumblick von bei dem Ausführungsbeispiel 360° auf, die mit einem Bildaufnehmer 10 und einer nicht dargestellten nachgeordneten Auswertungseinrichtung in Bildübertragungsverbindung steht. Der Bildaufnehmer 10 ist bei diesem Ausführungsbeispiel durch eine Digitalkamera mit einem Bildsensor 12 gebildet. Bei dem in Fig. 1 dargestellten Ausführungsbeispiel handelt es sich bei der Optik 8 um ein rein brechungsoptisch abbildendes Fisheye-Objektiv, dessen optische Achse in Fig. 1 durch eine strichpunktierte Linie 14 gekennzeichnet ist.

Bei dem dargestellten Ausführungsbeispiel weist die Optik 8 einen Bildwinkel von > 180°, nämlich ca. 185°, auf, so daß die Optik 8 nicht nur einen schräg vor der Frontlinse der Optik 8 liegenden Bereich der Innenfläche 4 erfaßt, sondern auch einen entlang der optischen Achse gegenüber der Frontlinse der Optik 8 zurückliegenden Bereich der Innenfläche 4.

Bei dem dargestellten Ausführungsbeispiel ist der Bildsensor 12 zur Erfassung des gesamten Bildkreises der Optik 8 ausgebildet. Von der Optik 8 aufgenommene Bilder der Innenfläche 4 werden von dem Bildsensor 12 des Bildaufnehmers 10 aufgezeichnet und in einer nicht dargestellten Speichereinrichtung abgespeichert.

Die Vorrichtung 2 weist eine Beleuchtungsanordnung 16 auf, die erfindungsgemäß relativ zu der Optik 8 derart angeordnet und ihr Strahlengang derart gewählt ist, daß ein erster axialer Abschnitt des Abbildungsbereiches in Hellfeldbeleuchtung und gleichzeitig ein zu dem ersten axialen Abschnitt beabstandeter zweiter axialer Abschnitt in Dunkelfeldbeleuchtung beleuchtbar ist. Bei dem dargestellten Ausführungsbeispiel weist die Beleuchtungsanordnung 16 eine ringförmige Lichtquelle 18 auf, die bei diesem Ausführungsbeispiel durch eine Mehrzahl von entlang eines Kreisringes angeordneten Leuchtdioden gebildet ist, die in einen kreisringförmigen Diffusor einstrahlen. Wie aus Fig. 1 ersichtlich ist, ist die Lichtquelle 18 in Achsrichtung der optischen Achse in unmittelbarer Nähe zu der Optik 8 angeordnet. Wie ferner aus Fig. 1 ersichtlich ist, ist die Lichtquelle 18 koaxial zu der optischen Achse 14 angeordnet und strahlt im wesentlichen koaxial zur optischen Achse 14 der Optik 8 ab.

Bei dem dargestellten Ausführungsbeispiel weist die Beleuchtungsanordnung 16 eine Spiegelanordnung 20 auf, die bei diesem Ausführungsbeispiel durch einen toroidförmigen Spiegel gebildet ist, dessen Reflexionsfläche 20 zu der optischen Achse 14 der Optik 8 geneigt ist. Bei dem dargestellten Ausführungsbeispiel ist die Reflexionsfläche 20 im Schnitt asphärisch ausgebildet. Wie aus Fig. 1 ersichtlich ist, ist die Reflexionsfläche 20 teilweise im Strahlengang der Lichtquelle 18 angeordnet, derart, daß in der in Fig. 1 dargestellten Abbildungsposition der Vorrichtung 2 die Reflexionsfläche 20 Teilstrahlen des von der Lichtquelle 18 emittierten Lichtes auf einem ersten axialen Abschnitt an der Innenfläche 4 reflektiert. Ein entsprechender Teilstrahl ist in Fig. 1 mit den Bezugszeichen 21 bezeichnet. Andere Teilstrahlen treffen an der Reflexionsfläche 20 vorbei unmittelbar auf die Innenfläche 4 auf. In Fig. 1 sind entsprechende Teilstrahlen beispielshalber mit den Bezugszeichen 22, 24, 26 bezeichnet. Wie aus Fig. 1 ersichtlich ist, ist der erste axiale Abschnitt des Abbildungsbereiches, in dem der Teilstrahl 21 auf die Innenfläche 4 auftrifft, in Achsrichtung der optischen Achse 14 zu dem zweiten axialen Abschnitt, in dem die Teilstrahlen 22, 24, 26 auf die Innenfläche 4 auftreffen, beabstandet. Sowohl der erste axiale Abschnitt als auch der zweite axiale Abschnitt befinden sich im Abbildungsbereich der Optik 8.

Wie aus Fig. 1 ersichtlich ist, befindet sich der erste axiale Abschnitt in Richtung der optischen Achse etwas hinter der Optik 8, ist aufgrund des Bildwinkels der Optik 8 von 185° jedoch von dem Abbildungsbereich erfaßt.

Bei dem dargestellten Ausführungsbeispiel ist durch die von der Reflexionsfläche 20 auf die Innenfläche 4 reflektierten Teilstrahlen des von der Lichtquelle 18 emittierten Lichtes eine Hellfeldbeleuchtung realisiert, während durch die Teilstrahlen 22, 24, 26 eine Dunkelfeldbeleuchtung realisiert ist. Somit ist erfindungsgemäß ein erster axialer Abschnitt des Abbildungsbereiches, bei dem dargestellten Ausführungsbeispiel der dem Teilstrahl 21 zugeordnete axiale Abschnitt, in Hellfeldbeleuchtung und gleichzeitig ein zu dem ersten axialen Abschnitt beabstandeter zweiter axialer Abschnitt, bei dem Ausführungsbeispiel der den Teilstrahlen 22, 24, 26 zugeordnete Abschnitt, in Dunkelfeldbeleuchtung beleuchtbar. Somit können mittels der erfindungsgemäßen Vorrichtung 2 der erste axiale Abschnitt (in Hellfeldbeleuchtung) und der zweite axiale Abschnitt (in Dunkelfeldbeleuchtung) gleichzeitig oder zeitlich aufeinanderfolgend abgebildet werden.

Die Funktionsweise der erfindungsgemäßen Vorrichtung 2 ist wie folgt:

Zum Abbilden der Innenfläche 4 des Hohlraumes in dem Werkstück 6 ist die Vorrichtung 2 mittels einer Vorschubeinrichtung (nicht dargestellt) in Richtung eines Doppelpfeiles 28 relativ zu dem Werkstück 6 bewegbar.

Mittels der Beleuchtungsanordnung 16 wird der erste axiale Abschnitt in Hellfeldbeleuchtung (Teilstrahl 21) und der zweite axiale Abschnitt (Teilstrahlen 22, 24, 26) der Innenfläche 4 in Dunkelfeldbeleuchtung beleuchtet und mittels der Optik 8 auf dem Bildsensor 12 abgebildet.

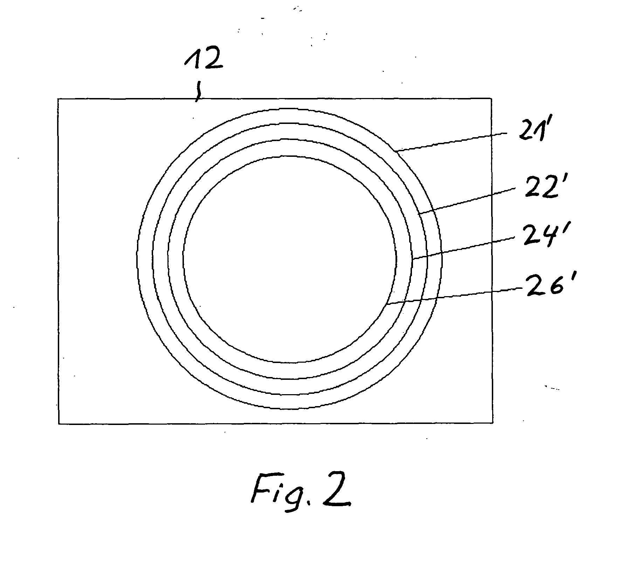

Da der Bildsensor 12 zur Erfassung des gesamten Bildkreises der Optik 8 ausgebildet ist, können gleichzeitig mehrere ringförmige Bereiche an der Innenfläche 4 abgebildet werden, wie in Fig. 2 veranschaulicht. Durch die Bezugszeichen 21', 22', 24' und 26' ist in Fig. 2 veranschaulicht, welcher der auf dem Bildsensor 12 abgebildeten ringförmigen Bereiche jeweils den Teilstrahlen 21, 22, 24 und 26 entspricht.

Während des Vorschubs der Vorrichtung 2 relativ zu dem Werkstück 6 werden aufeinanderfolgend unterschiedliche axiale Bereiche der Innenfläche 4 abgebildet und in der Auswertungseinrichtung in Bilder umgesetzt, die jeweils einer Abwicklung der Innenfläche 4 entsprechen.

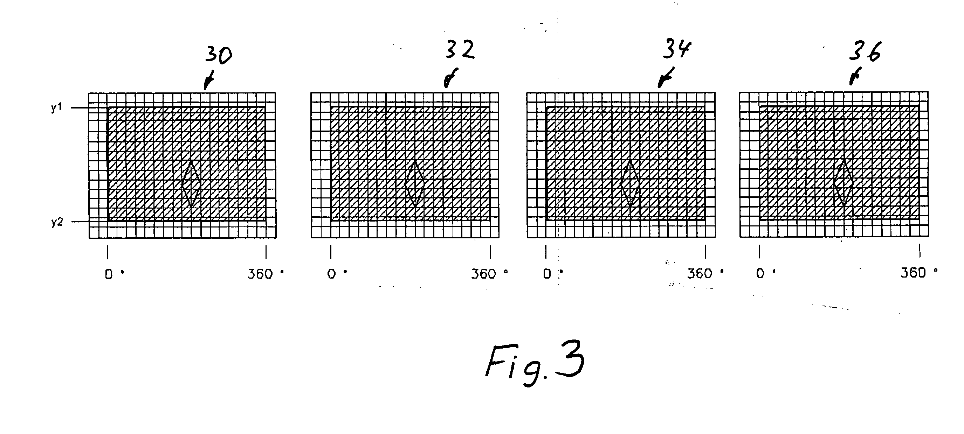

Fig. 3 veranschaulicht entsprechende Bilder 30, 32, 34, 36 im Bildspeicher der Auswertungseinrichtung, wobei das Bild 30 einer Abbildung in Hellfeldanordnung entspricht und die Bilder 32, 34, 36 einer Abbildung in Dunkelfeldanordnung entsprechen. Die Art und Weise, wie die Auswertungseinrichtung die auf dem Bildsensor abgebildeten kreisförmigen Bereiche (vgl. Fig. 2) in ein karthesisches Bild umsetzt, ist beispielsweise durch DE 10 2007 031 358 A1 bekannt, deren Offenbarungsgehalt hiermit durch Bezugnahme in die vorliegende Anmeldung aufgenommen wird.

Anhand der in Hellfeldanordnung bzw. Dunkelfeldanordnung aufgenommenen Bilder kann festgestellt werden, ob die zu untersuchende Innenfläche 4 hinsichtlich ihrer Oberflächenbeschaffenheit vorbestimmten Anforderungen genügt.

Dadurch, daß die Innenfläche sowohl in Hellfeldanordnung als auch in Dunkelfeldanordnung abgebildet werden kann, sind Oberflächendefekte besonders zuverlässig feststellbar.

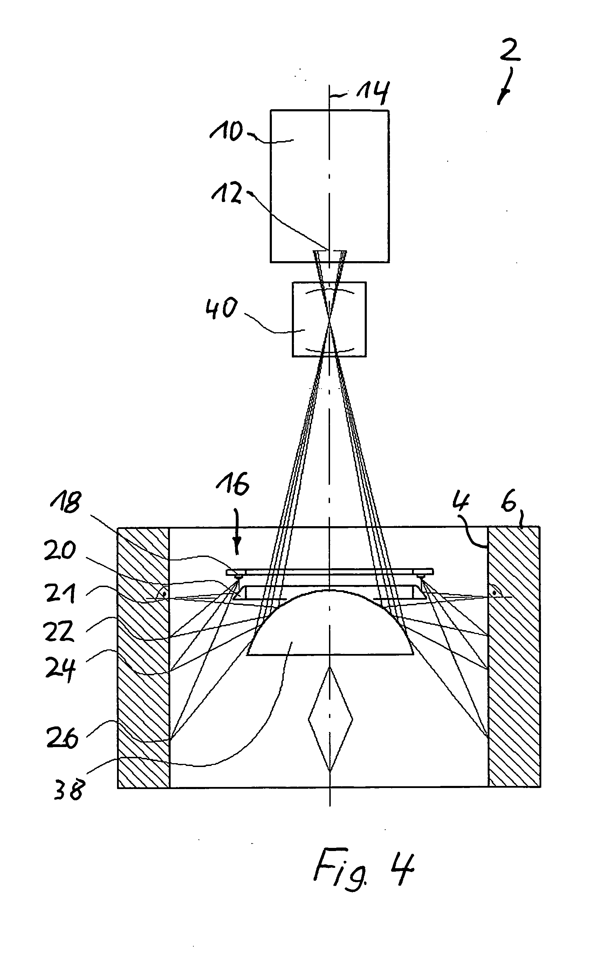

In Fig. 4 ist ein zweites Ausführungsbeispiel einer erfindungsgemäßen Vorrichtung 2 dargestellt, das sich von dem Ausführungsbeispiel gemäß Fig. 1 dadurch unterscheidet, daß anstelle einer rein brechungsoptisch abbildenden Optik eine katadioptrische Optik vorgesehen ist, die bei diesem Ausführungsbeispiel aus einem Abbildungsspiegel 38 und einem Abbildungsobjektiv 40 besteht. Der Abbildungsspiegel 38 ist in Fig. 4 lediglich beispielshalber als Kugelsegment dargestellt. Entsprechend den jeweiligen Anforderungen kann er jedoch auch kegelartig oder mit einem beliebigen anderen geeigneten Querschnitt, beispielsweise einem asphärischen oder konvexen Querschnitt, ausgebildet sein.

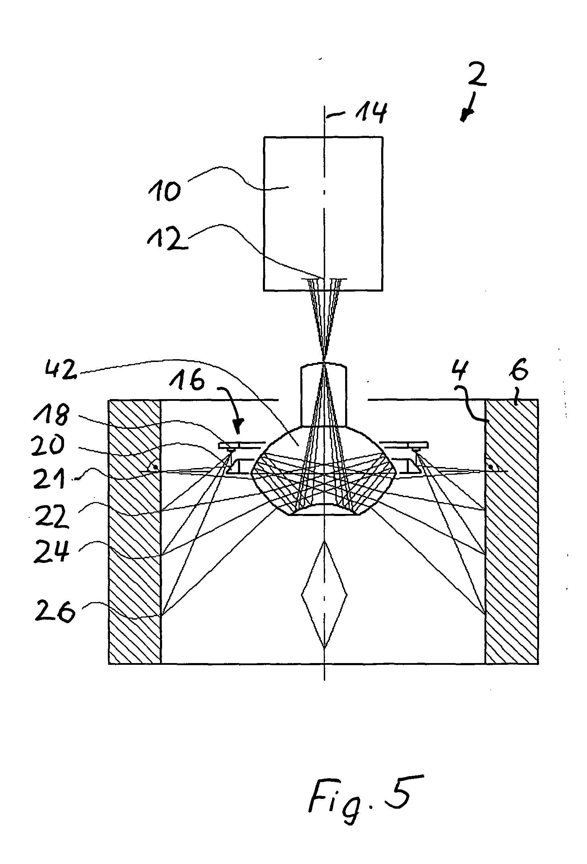

In Fig. 5 ist ein drittes Ausführungsbeispiel einer erfindungsgemäßen Vorrichtung 2 dargestellt, bei dem in Übereinstimmung mit dem Ausführungsbeispiel gemäß Fig. 4 eine katadioptrische Optik 42 verwendet ist. Zur Verbesserung der Abbildungsqualität ist die optische katadioptrische Optik 42 so ausgebildet, wie in US 4 566 763 offenbart.

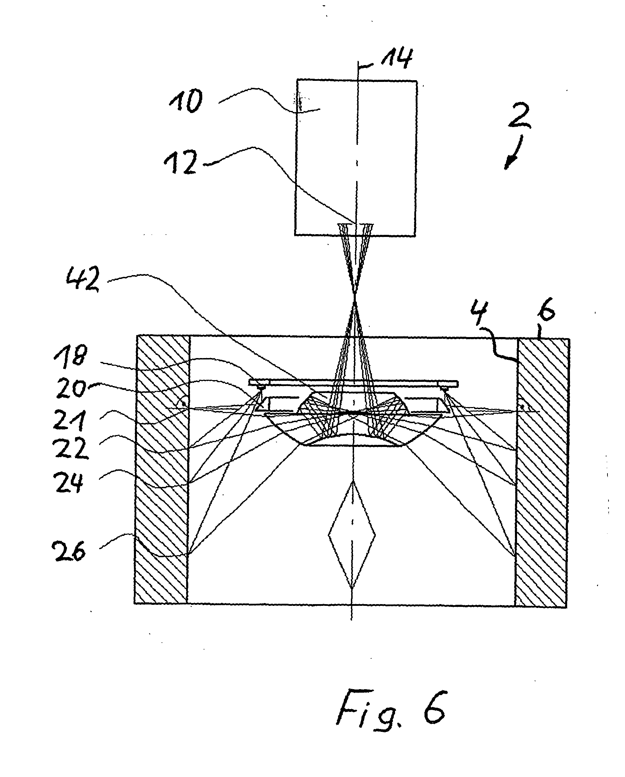

In Fig. 6 ist ein viertes Ausführungsbeispiel einer erfindungsgemäßen Vorrichtung 2 dargestellt, bei dem die katadioptrische Optik 42 so ausgebildet ist, wie in US 5 473 474 offenbart.

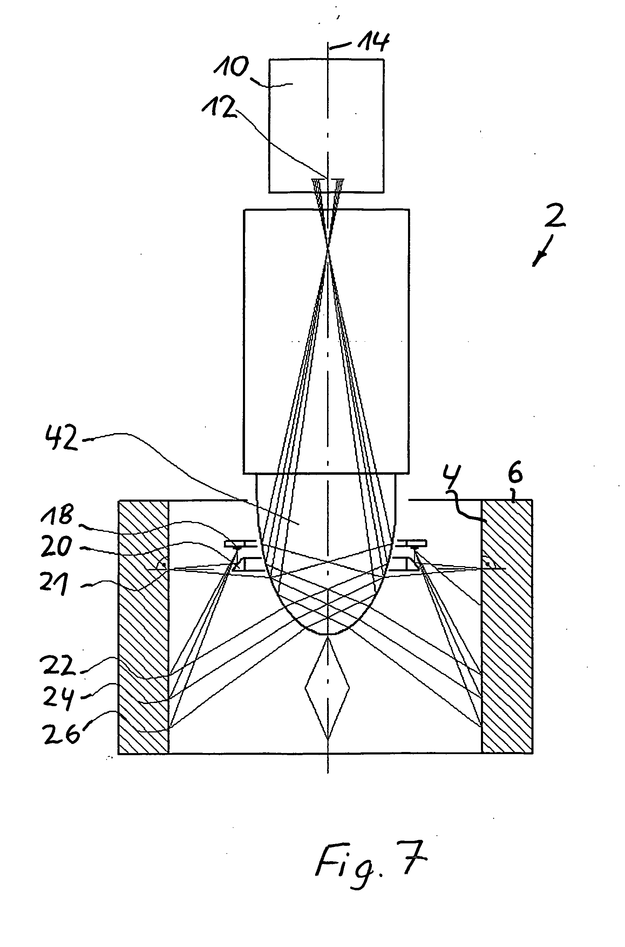

In Fig. 7 ist ein fünftes Ausführungsbeispiel einer erfindungsgemäßen Vorrichtung 2 dargestellt, bei dem die katadioptrische Optik 42 so ausgebildet ist, wie in US 3 552 820 offenbart.

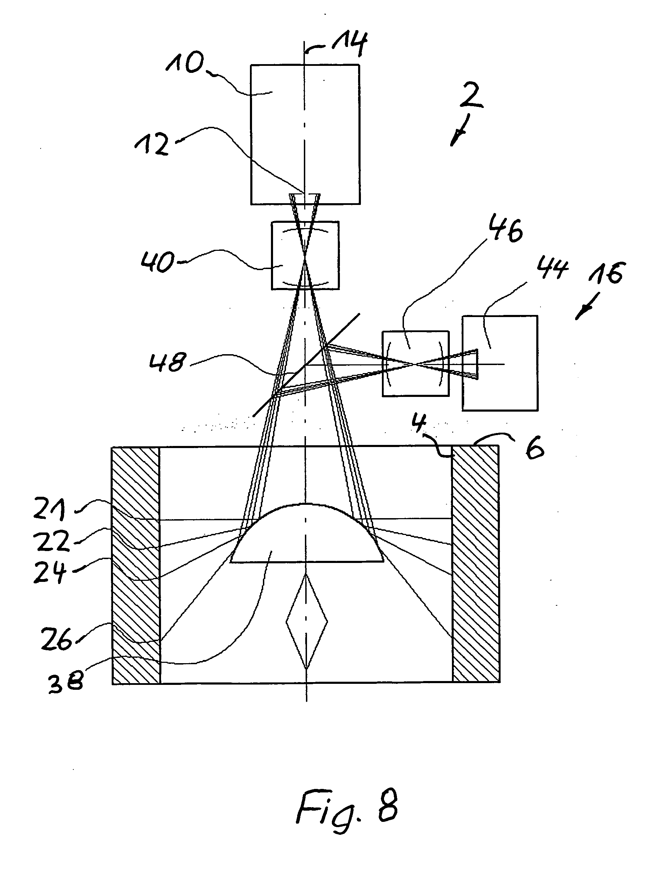

In Fig. 8 ist ein sechstes Ausführungsbeispiel einer erfindungsgemäßen Vorrichtung 2 dargestellt, das sich hinsichtlich der Beleuchtungsanordnung 16 von dem Ausführungsbeispiel gemäß Fig. 4 unterscheidet. Die Beleuchtungsanordnung 16 weist bei diesem Ausführungsbeispiel eine Lichtquelle 44 auf, die beispielsweise als LED-Glühlampe, Kurzbogenlampe oder dergleichen ausgeführt sein kann. In Strahlrichtung vor der Lichtquelle 44 ist ein Beleuchtungskondensor zur Projektion der Lichtquelle 44 angeordnet, wobei die Lichtführung des von der Lichtquelle 44 erzeugten Lichtes kongruent zum Abbildungsstrahlengang ist. Das von der Lichtquelle emittierte Licht wird über einen teildurchlässigen Umlenkspiegel 48 auf den Abbildungsspiegel 38 gelenkt.

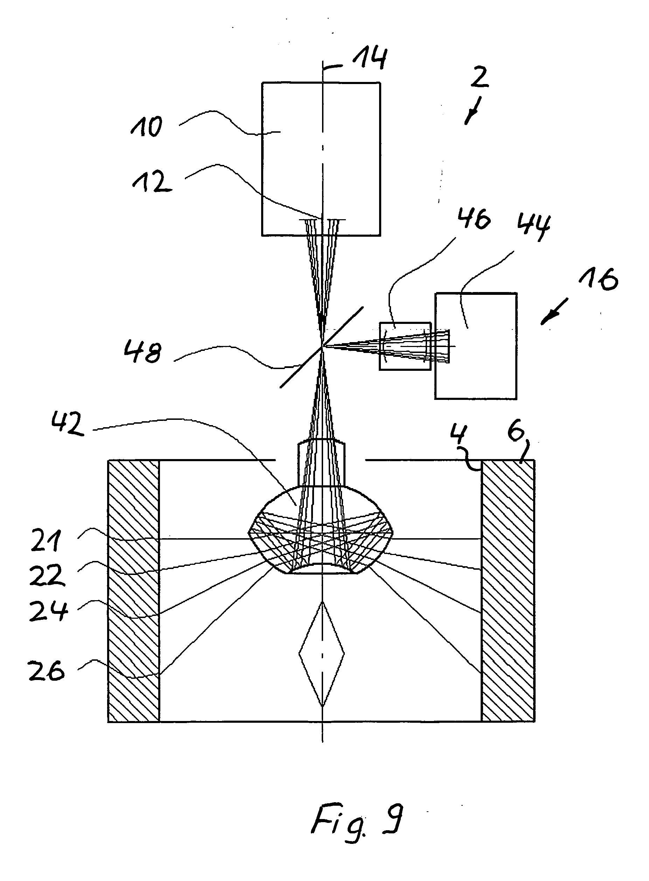

Fig. 9 zeigt ein siebtes Ausführungsbeispiel einer erfindungsgemäßen Vorrichtung, das sich von dem Ausführungsbeispiel gemäß Fig. 8 dadurch unterscheidet, daß eine katadioptrische Optik 42 entsprechend Fig. 5 verwendet wird.

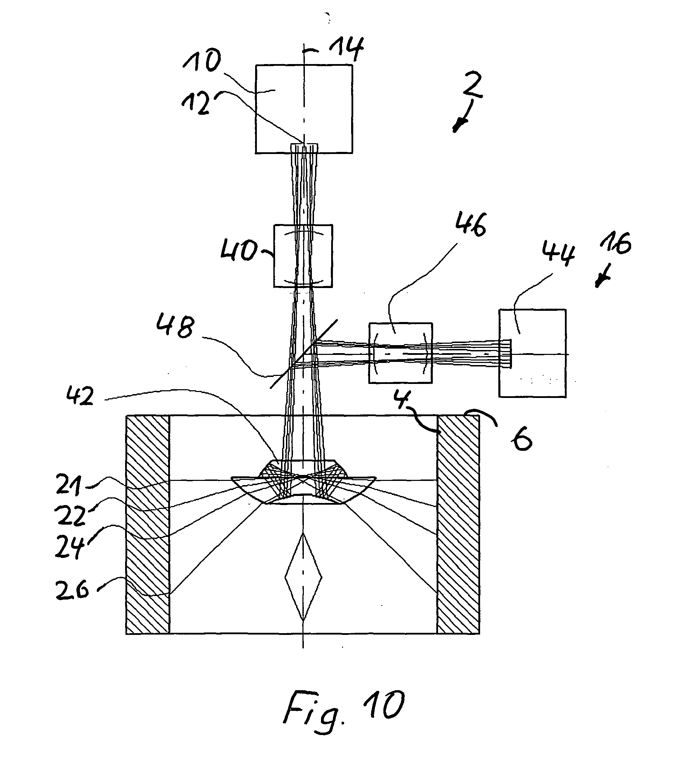

In Fig. 10 ist ein achtes Ausführungsbeispiel einer erfindungsgemäßen Vorrichtung 2 dargestellt, das sich von dem Ausführungsbeispiel gemäß Fig. 8 dadurch unterscheidet, daß eine katadioptrische Optik 42 entsprechend Fig. 6 verwendet wird.

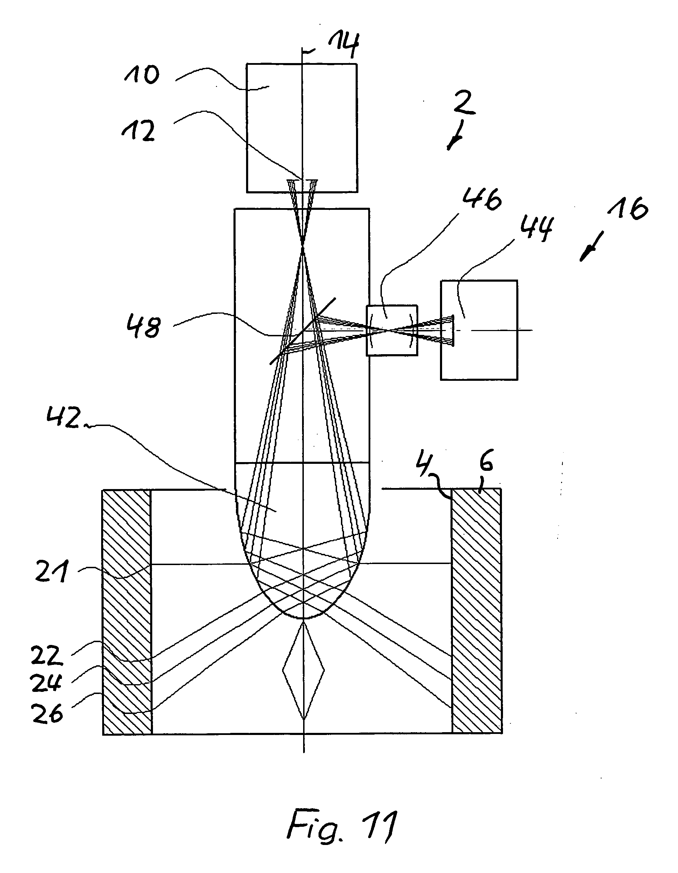

In Fig. 11 ist ein neuntes Ausführungsbeispiel einer erfindungsgemäßen Vorrichtung 2 dargestellt, das sich von dem Ausführungsbeispiel gemäß Fig. 8 dadurch unterscheidet, daß eine katadioptrische Optik 42 entsprechend Fig. 7 verwendet wird.

## Patentansprüche

1. Vorrichtung zur Abbildung der Innenfläche eines Hohlraumes in einem Werkstück,
mit einer Optik mit Rundumblick, die mit einem Bildaufnehmer und einer nachgeordneten Auswertungseinrichtung in Bildübertragungsverbindung steht, und
mit einer Beleuchtungsanordnung mit einer Lichtquelle zum Beleuchten eines von der Optik erfaßten Abbildungsbereiches der Innenfläche,
**dadurch gekennzeichnet,**
**daß** die Beleuchtungsanordnung (16) relativ zu der Optik (8) derart angeordnet und ihr Strahlengang derart gewählt ist, daß ein erster axialer Abschnitt des Abbildungsbereiches in Hellfeldbeleuchtung und gleichzeitig ein zu dem ersten axialen Abschnitt beabstandeter zweiter axialer Abschnitt des Abbildungsbereiches in Dunkelfeldbeleuchtung beleuchtbar ist.

2. Vorrichtung nach Anspruch 1, **gekennzeichnet durch** eine Spiegelanordnung, deren Reflexionsfläche (20) teilweise im Strahlengang der Lichtquelle (18) angeordnet ist, derart, daß in Abbildungsposition der Vorrichtung (2) Teilstrahlen (22, 24, 26) des von der Lichtquelle (18) emittierten Lichtes auf den zweiten axialen Abschnitt des Abbildungsbereiches auftreffen und die Reflexionsfläche (20) andere Teilstrahlen (21) auf den ersten axialen Abschnitt reflektiert.

3. Vorrichtung nach Anspruch 2, **dadurch gekennzeichnet, daß** die Spiegelanordnung eine ringförmige Reflexionsfläche (20) aufweist.

4. Vorrichtung nach Anspruch 2 oder 3, **dadurch gekennzeichnet, daß** die Reflexionsfläche (20) zur optischen Achse (14) der Optik (8) koaxial ist.

5. Vorrichtung nach einem der Ansprüche 2 bis 4, **dadurch gekennzeichnet, daß** die Reflexionsfläche (20) zur optischen Achse (14) der Optik (8) wenigstens abschnittsweise winkelig angeordnet ist.

6. Vorrichtung nach einem der vorhergehenden Ansprüche, **dadurch gekennzeichnet, daß** die Optik (8) einen Bildwinkel von etwa 180°, vorzugsweise > 185°, aufweist.

7. Vorrichtung nach einem der vorhergehenden Ansprüche, **dadurch gekennzeichnet, daß** die Beleuchtungsanordnung (16) eine ringförmige Lichtquelle aufweist.

8. Vorrichtung nach Anspruch 7, **dadurch gekennzeichnet, daß** die Lichtquelle (18) in Achsrichtung der optischen Achse (14) in unmittelbarer Nähe zu der Optik (8) angeordnet ist.

9. Vorrichtung nach Anspruch 7 oder 8, **dadurch gekennzeichnet, daß** die Lichtquelle (18) koaxial zur optischen Achse (14) der Optik (8) angeordnet ist.

10. Vorrichtung nach einem der Ansprüche 7 bis 9, **dadurch gekennzeichnet, daß** die Lichtquelle (18) im wesentlichen koaxial zur optischen Achse (14) der Optik (8) abstrahlt.

11. Vorrichtung nach einem der vorhergehenden Ansprüche, **dadurch gekennzeichnet, daß** der Bildaufnehmer (10) zur Erfassung des gesamten Bildkreises der Optik (8) ausgebildet ist.

12. Vorrichtung nach einem der vorhergehenden Ansprüche, **gekennzeichnet durch** eine Vorschubeinrichtung für einen axialen Vorschub der Vorrichtung (2) relativ zu dem Werkstück (6).

13. Vorrichtung nach einem der vorhergehenden Ansprüche, **gekennzeichnet durch** eine Speicherungseinrichtung zur Speicherung von Abbildungsdaten entsprechend der jeweiligen axialen Position der Vorrichtung (2) relativ zu dem Werkstück (6).

14. Vorrichtung nach einem der vorhergehenden Ansprüche, **dadurch gekennzeichnet, daß** die Optik (8) einen Rundumblick von 360° aufweist.

15. Vorrichtung nach einem der vorhergehenden Ansprüche, **dadurch gekennzeichnet, daß** die abzubildende Innenfläche (4) im wesentlichen rotationssymmetrisch ausgebildet, insbesondere durch eine Zylinderbohrung eines Kurbelgehäuses gebildet ist.
